# EUROPÄISCHE PATENTSCHRIFT

(11) **EP 1 088 211 B1**
(45) Veröffentlichungstag und Bekanntmachung des Hinweises auf die Patenterteilung: **25.06.2003**
(21) Anmeldenummer: 99926241.3
(22) Anmeldetag: 14.04.1999
(51) Int. Cl.: G01M 15/00, G01M 7/00, G01N 29/04

(54) **AKUSTISCHES DIAGNOSESYSTEM UND -VERFAHREN**
ACOUSTIC DIAGNOSTIC SYSTEM AND METHOD
SYSTEME ET PROCEDE DE DIAGNOSTIC ACOUSTIQUE

(30) Priorität: 17.04.1998 DE 19817169
(43) Veröffentlichungstag der Anmeldung: 04.04.2001
(73) Patentinhaber: SIEMENS AKTIENGESELLSCHAFT, 80333 München (DE)
(72) Erfinder: HARTMANN, Doris, D-96163 Gundelsheim (DE); KACEM, Sofiane, D-90475 Nürnberg (DE); MAIER, Karl-Heinz, D-90489 Nürnberg (DE); PLEWINSKI, Nicolai, D-90552 Röthenbach (DE); VÖLKEL, Thomas, D-95138 Bad Steben (DE)
(86) Internationale Anmeldenummer: DE9901118
(87) Internationale Veröffentlichungsnummer: WO99054703

(56) Entgegenhaltungen:
- DE-A- 4 207 728
- US-A- 5 511 004

## Beschreibung

Die Erfindung betrifft ein akustisches. Diagnosesystem zur insbesondere automatischen Qualitätskontrolle von Prüfobjekten, insbesondere von Motoren, von Keramiken, etc.

Die Erfindung betrifft weiter eine akustisches Diagnoseverfahren zur insbesondere automatischen Qualitätskontrolle von Prüfobjekten, insbesondere von Motoren, von Keramiken, etc.

Ein derartiges Prüfsystem bzw. Prüfverfahren kommt beispielsweise im Bereich der Signalerfassung sowie Signalauswertung zum Einsatz. Hierbei ist häufig eine Mischung aus Messhardware und Signalverarbeitungssoftware miteinander zu kombinieren, wobei aufgrund der Komplexität der Zusammenhänge für einen derartigen Messaufbau häufig das Wissen und die Erfahrung von Spezialisten erforderlich sind.

Aus WO 98/01728 ist eine Vorrichtung zur Erfassung von analogen Messsignalen für die akustische Diagnose von Prüflingen bekannt. Dabei können mit Hilfe von Schwingungsaufnehmern von einem Prüfling analoge Messsignale aufgenommen werden. Ein Computer ist mit einer standardmäßigen Schnittstellenkarte ausgerüstet, welche zur Digitalisierung der Messsignale dient. Ein Schaltsignal dient zur Erzeugung eines Triggersignals, welches über eine bevorzugt serielle Schnittstelle eingebbar ist. Ein Steuerprogramm im Computer schaltet über das Triggersignal die Eingabe von Messsignalen ein und aus.

Die DE 42 07 728 A1 beschreibt ein Verfahren zur Qualitätsprüfung von Prüfobjekten, bei dem die zu untersuchenden Prüfobjekte durch eine externe, impulsförmige Anregung zur Emission von Schallwellen angeregt werden, bei dem die emittierten Schallwellen in einem Schalldetektor registriert werden und bei dem auf der Grundlage des registrierten Schalls eine Einteilung der Prüfobjekte in mindestens zwei Qualitätsklassen erfolgt. Die Klassifikation des Schallspektrums der Prüfobjekte erfolgt dabei durch ein neuronales Netzwerk.

Der Erfindung liegt die Aufgabe zugrunde, ein akustisches Diagnosesystem und -verfahren anzugeben, das auf einfache weise eine automatisierte Qualitätsprüfung ermöglicht.

Diese Aufgabe wird durch ein Diagnosesystem bzw. ein Verfahren mit den im Anspruch 1 bzw. Anspruch 7 angegebenen Merkmalen gelöst.

Das Diagnosesystem ermöglicht aufgrund der akustischen Diagnose somit eine automatisierte und beliebig nachvollziehbare Qualitätskontrolle, insbesondere bei der Herstellung aller Produkte, bei denen eine akustische Diagnose Rückschlüsse auf die Qualität der Produkte erlaubt.

Das Diagnosesystem kann im Gegensatz zu bisherigen akustischen Prüfungen, die häufig von besonders geschulten Personen durchgeführt werden, beliebig häufig eingesetzt werden. Zudem ist durch die automatische Archivierung der Qualitätsprüfungen auch eine zuverlässige und jederzeit nachvollziehbare Nachprüfung möglich.

Eine Einbindung des Diagnosesystems in einen Produktionsablauf kann in der Weise erfolgen, daß das Diagnosesystem Steuerungsmittel aufweist oder mit Steuerungsmitten gekoppelt ist, die zur Steuerung eines Produktionsablaufs zur Herstellung des Prüfobjekts vorgesehen sind.

Eine anschauliche Klassifizierung der Prüfobjekte kann dadurch sichergestellt werden, daß das Diagnosesystem Mittel umfaßt, die anhand eines Eingängssignals eines Prüfobjekts mehrere Klassifizierungen oder anhand eines einem Prüfobjekt zugeordneten Eingangssignals mehrere Merkmale zur Klassifizierung des Prüfobjekts ermitteln, wobei die den jeweiligen Merkmalen zugehörigen Merkmale jeweils farblich codiert werden.

Eine hinsichtlich der Anzahl optimierte Merkmalsbestimmung wird dadurch sichergestellt, daß das Diagnosesystem Mittel zur Ermittlung von redundanten Merkmalen umfaßt, die eine Korrelation von vorhandenen Merkmalen ermitteln.

Eine Möglichkeit zur Filterung redundanter Merkmale besteht darin, daß das Diagnosesystem Mittel zur Erzeugung einer Korrelationsmatrix zur Visualisierung redundanter Merkmale aufweist.

Vorteilhafte Anwendungsgebiete des Diagnosesystems bestehen darin, daß das Diagnosesystem zur Qualitätskontrolle von selbst erregten Prüfobjekten, insbesondere Motoren und/oder von fremd erregten Prüfobjekten, insbesondere von Glas oder Keramik vorgesehen ist.

Im folgenden wird die Erfindung anhand der in den Figuren dargestellten Ausführungsbeispiele näher beschrieben und erläutert.

Es zeigen:
- FIG 1: eine Prinzipdarstellung eines akustischen Diagnosesystems,
- FIG 2: eine Prinzipdarstellung der Basiskomponenten eines intelligenten akustischen Diagnosesystems,
- FIG 3: eine schematische Darstellung zu beispielhaften Aufgabenbereichen von Wissensbasen eines Technikbaukasten,
- FIG 4: eine beispielhafte Struktur eines Technikbaukastens,
- FIG 5: eine beispielhafte Struktur eines zusammengestellten Technikbaukasten "Antriebsaggregat",
- FIG 6: eine beispielhafte Darstellung einer Merkmalsauswertung,
- FIG 7-9: jeweils eine Darstellung für einzelne Merkmale in Form von Scatterplots und
- FIG 10: eine beispielhafte Korrelationsmatrix.

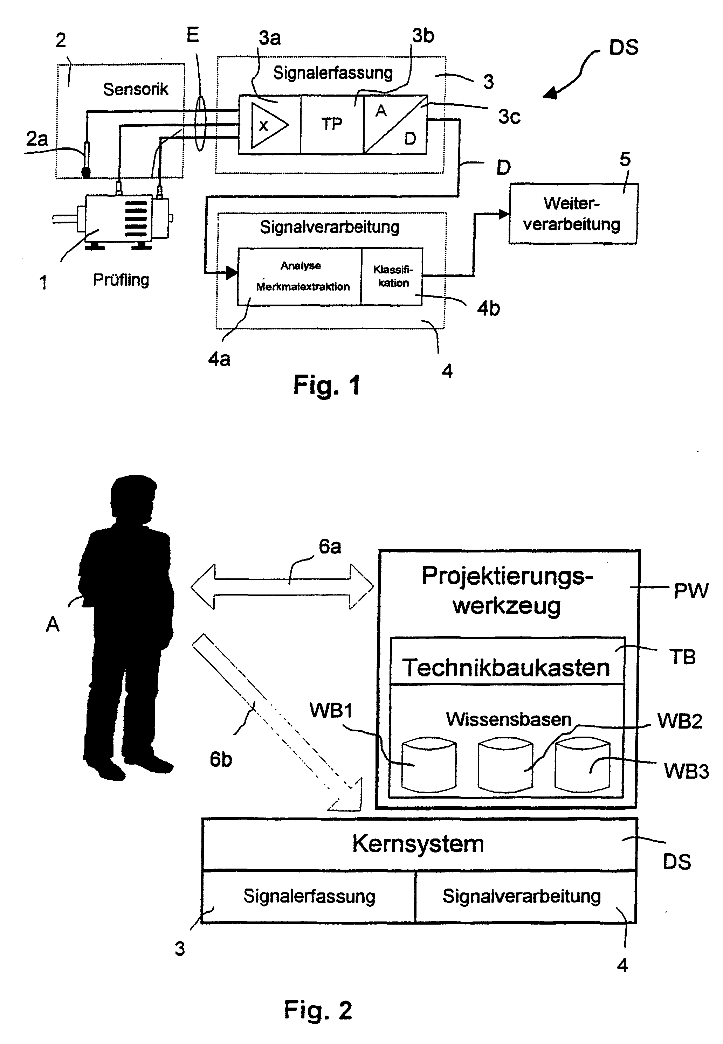

Fig. 1 zeigt eine Prinzipdarstellung eines akustischen Diagnosesystems zur Diagnose eines Prüfobjekts 1, dessen Qualität und/oder Funktion bestimmt werden soll. Bei dem Prüfobjekt 1 handelt es sich bei dem in Fig. 1 dargstellten Ausführungsbeispiel um einen Elektromotor, d.h. um ein selbst erregtes Prüfobjekt, das von sich aus im Betriebszustand schwingt. Alternativ können mit Hilfe des in Fig. 1 dargestellten Diagnosesystems auch fremderregte Prüfobjekte, z. B. Keramiken, Glas etc. geprüft werden, die durch einen äußeren Impuls zum Schwingen angeregt werden müssen. Die Signalerfassung gliedert sich in mehrere Stufen auf. Am Anfang der Verarbeitungskette steht die Sensorik 2. Sie übernimmt die Wandlung der mechanischen Größen, die eine Schwingung charakterisieren in elektrische Signale. Von den möglichen Schwingweg s, Geschwindigkeit v und Beschleunigung a wird meist die Beschleunigung erfaßt. Für die Aufnahme der Beschleunigung (Körperschallsignal) werden piezoelektrische Beschleunigungssensoren verwendet. Diese werden unmittelbar am Prüfling angebracht. Zur Bestimmung des Luftschallpegels dienen Mikrophone 2a, die in der näheren Umgebung des Prüflings angeordnet sind. Die nächste Ebene stellt die Signalkonditionierung 3 dar. Die von den Sensoren kommenden elektrischen Signale E werden verstärkt und in einem Tiefpaß 3b tiefpaß gefiltert (Aliasing). Abschließend werden die analogen Meßgrößen mit einem AD-Wandler 3c in diskrete digitale Werte D für die darauffolgende rechnergestützte Auswertung umgesetzt. Die Signalverarbeitung 4 besteht aus der Signalanalyse 4a bzw. Merkmalextraktion und Klassifikation 4b.

Die Signalanalyse 4a gewinnt aus den aufgenommenen und gewandelten Signalen charakteristische Ergebnisse, die sog. Merkmale, mittels denen sich die Signale beschreiben lassen. Sinn der Analyse ist die Datenreduktion der Meßwerte, ohne daß dabei relevante Information über den Prüfling verloren geht. Die gebräuchlichste Analysemethode in der Schwingungsanalyse ist die FastFourierTransformation (FFT). Das Zeitsignal wird mit ihrer Hilfe in seine Frequenzkomponenten, aus denen es sich zusammensetzt überführt. Die Ergebnisse der verschiedenen Analysemethoden sind Bestandteile der Merkmalextraktion. Hier werden charakteristische Merkmale festgelegt, anhand derer sich die Güteklasse des Prüflings bestimmen läßt. Während der Klassifikation erfolgt die Zuordnung des Prüflings zu den einzelnen Qualitätsklassen. Eine Klassifizierung kann auf einfachen Schwellwerten basieren, aber auch komplexe Algorithmen (Neuronale Netze, Fuzzy Logic, Clusteranalyse usw.) verwenden.
Das Ergebnis der Klassifizierung kann dazu dienen den Produktionsablauf 5 zu steuern. Ein defektes Teil kann so zum Beispiel zur Nachbearbeitung ausgeschleust werden. Die Daten über das Auftreten und die Häufigkeit der Fehlerklassen können archiviert werden. Damit ist es möglich Rückschlüsse auf die Produktion zu ziehen. Wenn zum Beispiel bei Elektromotoren vermehrt Lagerschäden auftreten, kann es darauf hin deuten, daß ein anderer Lagertyp verwendet werden sollte. Hier läßt sich erkennen, daß zur Entwicklung und Parametrierung der einzelnen Komponenten eines Prüfsystems das Fachwissen aus den Gebieten der Vibroakustik, Meßtechnik, Datenverarbeitung sowie über die Technologie des Prüflings erforderlich ist.

Das in Fig. 1 dargestellte Diagnosesystem trägt als automatisiertes Diagnosesysteme den steigenden Qualitätsanforderungen an die Produktion Rechnung. Aufgrund der Automatisierung arbeitet das Diagnosesystem nach objektiven Kriterien und mit gleichbleibender Genauigkeit. Zusätzlich erfüllt es auch die Anforderungen nach niedrigen Produktionskosten und einer hohen Produktivitätsrate. Um Rückschlüsse auf den Fertigungsprozeß ziehen zu können, ist das Prüfsystem in der Lage sein, die Qualitäts- bzw. Fehlerklassen des Produkts dem jeweiligen Fertigungsabschnitt zuzuordnen. Der Wahl des Diagnosesignals, aus dem die Information über den Prüfling gewonnen werden soll, kommt dabei ein entscheidende Rolle zu. Mit Hilfe der in Fig. dargestellten Sensorik 2 ist dieses leicht erfaßbar und im Rahmen des Fertigungstaktes auswertbar. Neben dem Schwingungsverhalten des Prüflings, d.h. der Vibration des Prüfobjektes 1 kann dabei nicht nur dieses, sondern auch das verursachte Geräusch betrachtet werden. Das in Fig. 1 gezeigte Diagnosesystem kann vom Anwender zudem einfach parametriert werden.

Fig. 2 zeigt die eine Prinzipdarstellung der Basiskomponenten eines intelligenten akustischen Diagnosesystems DS mit zugehörigem Projektierungswerkzeug PW. Das Diagnosesystem DS besteht aus dem bereits im Zusammenhang mit Fig. 1 beschriebenen Komponenten: Signalerfassung 3 und Signalverarbeitung 4. Das Projektierungswerkzeug PW umfaßt einen Technikbaukasten TB mit Wissensbasen WB1..WB3. Auf das Diagnosesystem DS sowie auf das Projektierungswerkzeug WB kann über Benutzerschnittstellen 6a, 6b von einem Anwender aus zugegriffen werden.

Um die gewünschte Beurteilung des Prüfobjektes 1 zu erhalten, müssen die Komponenten des Diagnosesystems sinnvoll parametriert und aufeinander abgestimmt werden. Bei den aktuell am Markt verfügbaren Systemen handelt es sich um Systeme, die von den Experten aus den jeweiligen Sparten entwickelt und zusammengesetzt werden. Dies bringt einen hohen Projektieraufwand mit sich. Dieser muß für jeden neuen Prüflingstypen erneut betrieben werden. In den einzelnen Schritten werden Standartmethoden verwendet, die an die jeweilige Prüfaufgabe angepaßt werden. Die Anpassung erfolgt aufgrund des Expertenwissens. Dieses benötigte Wissen aus den einzelnen Bereichen macht es einer einzelnen Person fast unmöglich ein komplettes Prüfsystem selbst zu konfigurieren. Daraus entsteht die Forderung nach der Entwicklung eines universellen Prüfsystems, das mittels einer Wissensbasis über die Technologie des zu prüfenden Objektes und die relevante Meß- und Auswertemethodik den Anwender bei der Projektierung unterstützt und somit die Projektieraufwand vermindert.

Das in den Fig. 1 und 2 dargestellte Diagnosesystem DS hingegen kann auf einfache Weise an die unterschiedlichsten Prüfaufgaben in der vibroakustischen Diagnose angepaßt werden können. Desweiteren wird der Anwender während der Projektierungs- und Parametrierungsphase vom System in Form von Vorschlägen unterstützt und im logischen Ablauf geführt. Dazu ist es notwendig, das System in einen allgemein verwendbaren Kern und in branchenabhängige Ergänzungen aufzuteilen. Eine branchenspezifische Ergänzung wird als Technikbaukasten TB bezeichnet, der dem Projektierungswerkzeug hinzugefügt werden kann. Das Kernsystem ist auch ohne der Unterstützung eines Technikbaukastens TB projektierbar, wobei jedoch vom Anwender A ein hohes Maß an Kenntnis über die benutzten Verfahren erwartet wird.

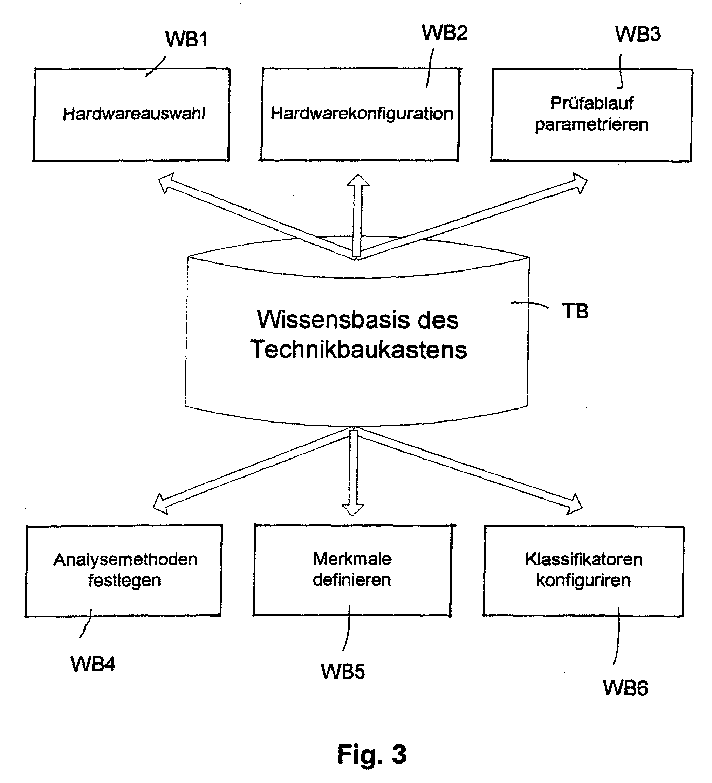

Fig. 3 zeigt eine schematische Darstellung zu beispielhafte Aufgabenbereiche von Wissensbasen WB1..WB6 eines Technikbaukasten TB.

Es ergeben sich einige Anforderungen an den Technikbaukasten TB, damit das System Assistenten gestützt parametriert werden kann. Ein Technikbaukasten beinhaltet Wissensbasen WB1..WB6, die Informationen über die Technologie des Prüfobjektes, den damit verbundenen vibroakustischen Eigenschaften, den meßtechnischen Zusammenhängen und der Signalverarbeitungsmethodik enthalten. Die Informationen und die daraus ableitbaren Regeln unterstützen den Anwender wie in Fig. 3 dargestellt ist bei der Konfiguration des Systems.

Der Technikbaukasten muß also in der Lage sein, den Anwender bei den folgenden Punkten zu unterstützen.
- Prüfmittelwahl
- Prüfbedingungen
- Signalauswertung

Bei der Prüfmittelwahl geht es darum den Bediener für seine Prüfaufgabe geeignete Sensoren und die dazu passende Erfassungshardware aus einem bekannten Hardwarekatalog vorzuschlagen. Ein zusätzlicher Punkt ist die Unterstützung bei der Konfiguration der ausgewählten Hardwarekomponenten, z.B. an welcher Position ein Sensor mit welchem Verfahren anzubringen ist.

Während der Festlegung der Prüfbedingung, unter denen der Prüfling erfaßt werden soll, ist auch die Hilfestellung mittels Technikbaukastens gefordert. Hierbei handelt es sich nicht nur um Prüfbedingungen, die den Prüfling direkt betreffen, sondern auch indirekte. Ein Beispiel für eine direkte Prüfbedingung ist die Anregungsart eines Keramikprüfobjektes. Eine indirekte kann ein maximal zulässiger Umgebungsschallpegel sein.
Ein weiterer Schwerpunkt bei dem, der Projektuer unterstützt werden soll, ist die Auswahl zweckmäßiger Signalverarbeitungsmethoden. Dies fängt bei der Wahl und Parametrierung eines Analyseverfahrens an, mit dem die gewonnenen Signale bearbeitet werden sollen. Die Interpretation des Analyseergebnisses aus technologische Sicht erfordert ebenfalls das Wissen des Technikbaukastens. Anhand dieser Interpretationen und des technologischen Wissens des Baukastens können dann von Anwender aussagekräftige Merkmale definiert werden. Ähnlich wie bei dem Analyseverfahren ist es auch bei der Klassifizierung möglich die Kenntnisse des Technikbaukasten über die Methodik zu Rate zuziehen.

Um diese Hilfe dem Bediener leisten zu können, muß dem Technikbaukasten im Vorfeld der eigentlichen Projektierung Information über das Prüfobjekt bereitgestellt werden. Diese erhält der Technikbaukasten vom Anwender, indem er gezielt den Bediener nach den relevanten Eigenschaften der Prüfobjektes befragt.

Zur Aufnahme von weiteren Prüflingstypen in einen Technikbaukasten muß dieser so strukturiert sein, daß dies ohne weiteres möglich ist und auf schon vorhandenen Wissen aufgebaut werden kann. So muß der Anwender auch die Möglichkeit haben sein individuelles Wissen einem Technikbaukasten hinzu zufügen. Die Flexibilität der Technikbaukästen ist somit ein wichtiger Aspekt nachdem sich ihre Struktur richten sollte. Die Struktur der verschiedenen Technikbaukästen muß dennoch einheitlich sein, damit das Basissystem unabhängig von der Art des Technikbaukastens funktioniert. Diese Ansprüche an einen Technikbaukasten und dessen eingeschlossenen Wissensbasis bilden die Rahmenbedingungen für die Realisierung.

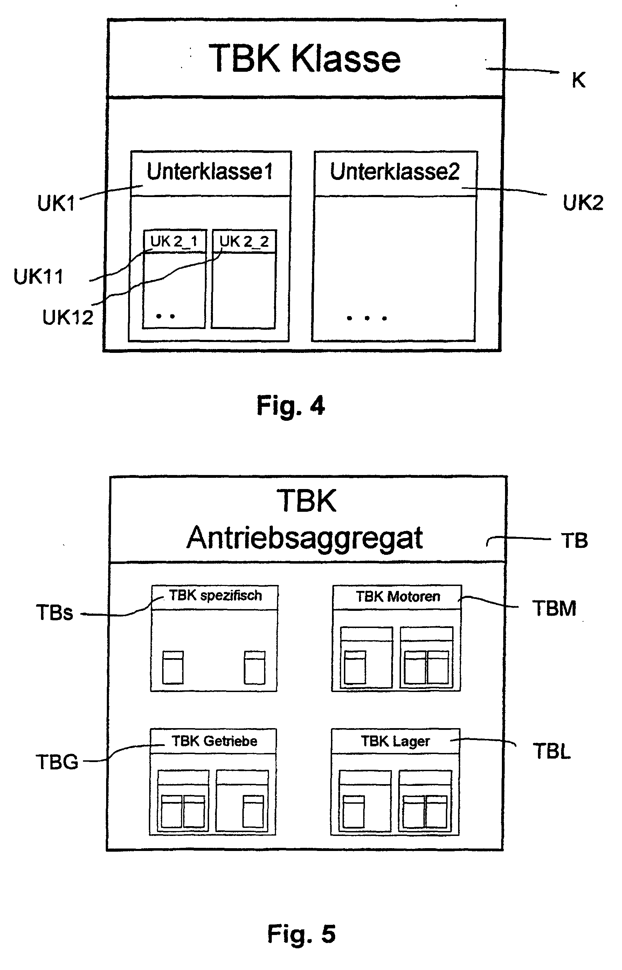

Fig. 4 zeigt eine beispielhafte Struktur eines Technikbaukastens TB. Der Technikbaukasten TB besteht aus einer Klasse K und Unterklassen UK1, UK2, die jeweils wiederum aus hierarchisch untergeordneten weiteren Unterklassen UK11, UK12 aufgebaut sein können.

Hierdurch können die Anforderungen an die Flexibilität und Erweiterbarkeit erfüllt werden. Eine Klasse K beinhaltet Wissen in Form von Regeln und Funktionen, die diese Regeln anwenden und interpretieren. Bei dieser Klassenstruktur lassen sich Parallelen zur Struktur der objektorientierten Programmierung ziehen. Jede Unterklasse UK spezifiziert das Wissen und die Funktionalität ihrer übergeordneten Klasse genauer. So wird eine Oberklasse "Rotierende Maschinen" (z.B. Information über Drehzahl) durch eine Unterklasse "Elektrische Motoren" (z.B. Information über Polzahl usw.) konkretisiert. Solchen Klassen lassen sich durch weitere Unterklassen noch näher spezifischeren (z.B. zusätzliche Klasse "Asynchrone Motoren").

Bei einer solchen Struktur der Technikbaukästen ist es möglich aus verschiedenen Baukästen neu logisch sinnvolle Technikbaukästen zu generieren. Dabei können recht komplexe Baukästen ohne größeren Aufwand entstehen, es müssen lediglich die spezifischen Eigenschaften dazu gefügt werden.

Fig. 5 zeigt die so erhaltene Struktur des zusammengestellten Technikbaukasten Antriebaggregat TB. Als Beispiel könnte sich ein Technikbaukasten TB Antriebsaggregat aus den Anteilen der Technikbaukästen Motoren TBM, Lager TBL und Getriebe TBG zusammensetzen plus spezifisches Wissen TBs über das Verhalten eines Antriebaggregates und zusätzliche benötigter Funktionalität.

Der Aufbau einer Wissensbasis zur Realisierung eines Technikbaukastens gliedert sich im wesentlichen in folgende Abschnitte:
1.Branchenüberblick und Einarbeitung in die dazugehörigen Grundlagen
2.Strukturierung in Teilgebiete nach vibroakustischen Aspekten und Beschreibungsversuch bezüglich des Schwingungsverhaltens
3.Labormessungen ausgewählter Kollektive
4.Analyse der Laboruntersuchungen
5.Wissensverifizierung und -konkretisierung

Im ersten Schritt verschafft man sich eine Überblick über die Produktvielfalt derjenigen Branche für die der Technikbaukasten entwickelt werden soll. Hierbei wird auch schon der grobe Rahmen abgesteckt, welche Produktbereiche der Technikbaukasten abdecken wird. Desweiteren arbeitet man sich in die technologischen Grundlagen des betreffenden Gebietes aus vibroakustischer Sicht ein, um im weiteren das beobachtete Verhalten deuten zu können.
Der darauffolgende Schritt beinhaltet die Strukturierung des Branchengebietes in die einzelnen Unterklassen, die aufgrund der vorangegangenen Überlegungen ähnliche technologischen Eigenschaften und somit auch ein ähnliches Schwingungs- und Geräuschverhalten aufweisen. Im Vorfeld der praktischen Untersuchung ausgewählter Kollektive im Labor wird versucht den Prüflingstyp anhand seiner technologischen Daten in seinem Vibrationsverhalten zu beschreiben. Dabei erfährt man welche Technologiedaten für den Technikbaukasten von Bedeutung sind und somit vor der eigentlichen Prüfsystemparametrierung vom Anwender erfragt werden müssen. Nachdem die theoretischen Vorüberlegungen abgeschlossen sind, geht es an die Auswahl typischer Vertreter der eingeteilten Klassen, die dann im Labor untersucht werden. Bei den Laboruntersuchungen gilt es zu klären mit welchen Meßmitteln und mit welchen Verfahren die einzelnen vibroakustischen Erscheinungen am günstigsten zu erfassen sind. Hierbei wird auch festgestellt, welche nicht schwingungstechnischen Größen gegebenenfalls mit erfaßt werden müssen, um zum Beispiel eine spätere Auswertung zu ermöglichen. Bei einem Technikbaukasten Glas könnte die Umgebungstemperatur eine solche Größe sein.

Die gewonnenen Meßdaten werden nun den verschiedenen Analyseverfahren unterzogen, damit Aussagen darüber getroffen werden können, welche Verfahren sich mit welchen Parametern am besten für diesen Prüflingstyp eignen. Es wird auch untersucht wie sich eine Schwingungserscheinung im Analyseergebnis äußert und welche technologische Begebenheit zugrunde liegt. Weiter wird ermittelt welche Schwingungserscheinungen spezifisch für diesen Prüfling sind und welche einen allgemeingültigen Charakter aufweisen. Nur auf andere Prüflingstypen übertragbare Erkenntnisse können der Wissensbasis hinzugefügt werden. Dieses Wissen dient später dazu den Anwender bei der Interpretation seiner Meßergebnisse zu unterstützen. Eine Hilfeleistung bei der Merkmalsdefinition kann nur dann erfolgen wenn sich auch hier allgemeingültige Merkmale für bestimmte Fehlerklassen diagnostizieren lassen.

Am Ende steht die Zusammenfassung der aus den vorherigen Schritten erzielten Kenntnisse. Es wird ein Vergleich durchgeführt, welche Nodellverhersagen sich im Laborversuch bestätigten und welche abgeändert oder sogar verworfen werden müssen. Hat man auf diese Weise eine solide Wissensbasis erhalten, kann daran gegangen werden dieses Wissen in die Struktur des Technikbaukastens einzuarbeiten. Der beschriebene Ablauf kann sukzessiv durchführt werden, das heißt ein bestehender Technikbaukasten kann Schritt für Schritt um neue Prüflingstypen erweitert werden.

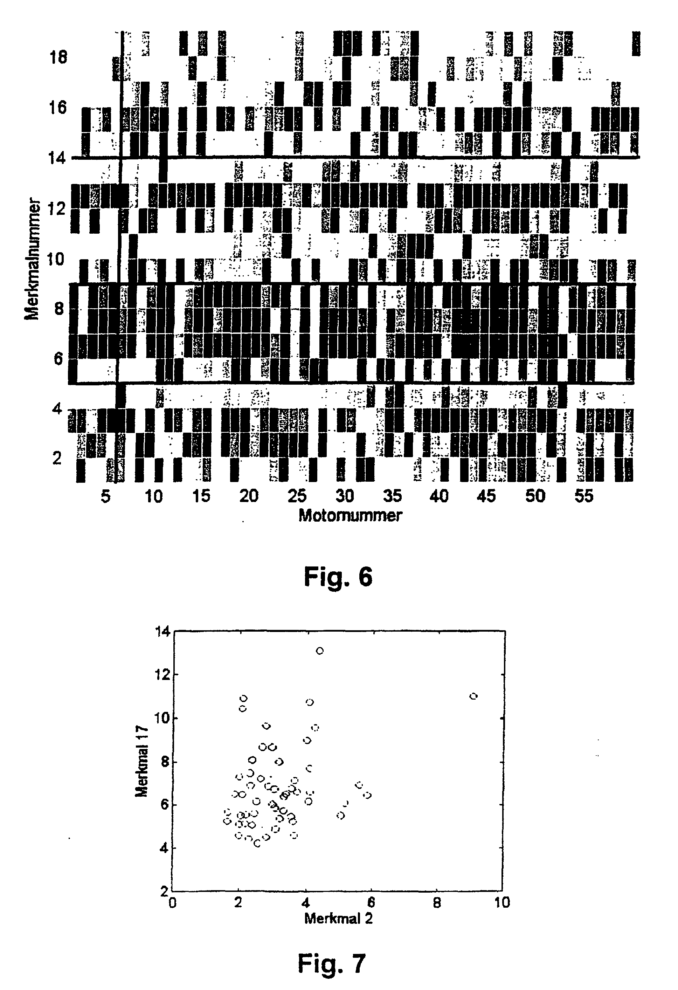

Fig. 6 zeigt eine beispielhafte Darstellung einer Merkmalsauswertung für 18 Merkmale und 59 Motoren als Prüfobjekte. Die Unterscheidbarkeit der Motoren in die jeweilige Klasse anhand eines Merkmals beschreibt dessen Güte. Um einen Gesamteindruck von der Wirksamkeit der Merkmale zu bekommen, wurden für jeden Motor die 18 Merkmale in Fig. 6 als Fehlfarbenplot dargestellt. Jede Merkmalszeile wurde auf ihren Maximalwert normiert. Der Wert eines Merkmals ist in der Farbe codiert (die Farbskala geht von blau(0) über grün/gelb(0,5) zu rot/braun(1)).

Eingezeichnet sind die Unterteilungen in gut (Nummer 1 bis 5) und schlecht (Nummer 6 bis 59) klassifizierte Motoren (vertikale Linie) und die einzelnen Kanäle (horizontale Linien: Gehäuse radial 1-4; Gehäuse tangential 5-8; Lager A 9-13 und Lager B 14-18).

Im Idealfall würde ein einheitlicher Farbton pro Merkmal bei den ersten fünf Motoren vorliegen, von dem sich die restlichen unterscheiden. Diese Merkmale würden sich dann besonders gut für eine Klassifikation aufgrund von Schwellwerten eignen. Liegt bei den guten und schlechten Motoren ein übereinstimmender Farbton vor, deutet dies auf ein unwesentliches Merkmal hin.

Ausgehend von dieser Darstellung wurden für einzelne Merkmale Scatterplots erstellt. Drei dieser Plots sind in den Fig. 7 bis 9 dargestellt. Die guten Motoren sind mit grünen Sternchen gekennzeichnet, die schlechten mit roten Kreisen.

Fig. 7 stellt die Merkmale 2 (Gehäuse radial 3fL-5fL) und 17 (Lager B Gleitlagerschwingungen) dar. Wie man sieht, liefern die beiden Merkmale keine gute Unterscheidung der Motoren. Dies konnte man auch aus Fig. 6 entnehmen. Eine bessere Trennung der Motoren erfolgt durch die beiden Merkmale 10 (Lager A Lamellenfrequenz) und 16 (Lager B 5fL-9fL) (Abbildung 4-18). Hier können, durch die Wahl eines Schwellwertes für jedes Merkmal, ca. 40 der 54 fehlerhaften Motoren getrennt werden. Dies zeigt sich auch in Fig. 6, wo bei den Merkmalen 10 und 16 der ersten fünf Motoren ein einheitlicher Farbton vorherrscht, hingegen Farbtöne höherer Intensität bei den schlechten.

Im Idealfall würde im Scatterplot bei der Trennbarkeit durch zwei Merkmale ein Cluster der Gutmotoren vorliegen, der sich nicht mit denen der anderen Fehlerklassen schneidet. Es werden aber wahrscheinlich immer mehrere Merkmale benötigt, damit alle Motoren richtig klassifiziert werden können.

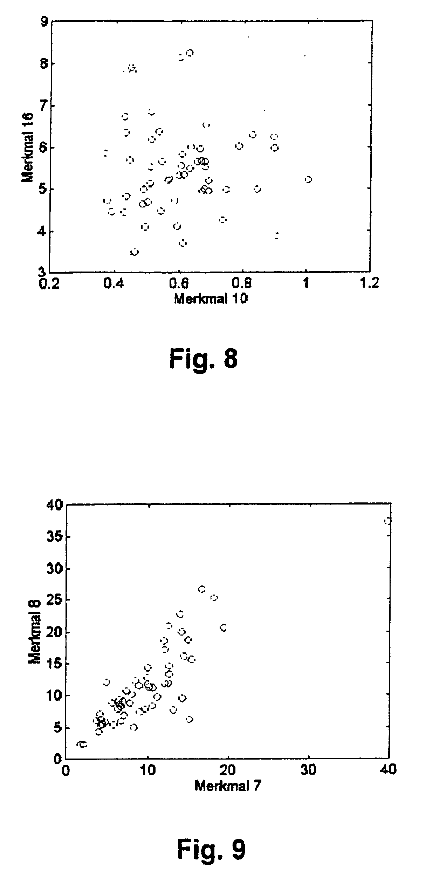

In Abbildung 9 sind die Merkmale 7 und 8 gezeigt. Hier ist interessant, daß die Punkte auf einer Diagonalen angeordnet sind. Diese Struktur deutet darauf hin, daß die beiden Merkmale statistisch voneinander abhängig sind und somit das gleiche aussagen.

Der nächste Abschnitt beschäftigt sich näher mit der Auffindung redundanter Merkmale durch Korrelation von Merkmalen. Bei der Auswahl von Merkmalen geht es auch darum, redundante Merkmale auszufiltern. Redundante Merkmale machen sich dadurch bemerkbar, daß sie das gleiche Verhalten aufzeigen wie andere. Um nun solche Merkmale ausfindig zu machen, bietet sich die Korrelationsfunktion an. Sie liefert als Ergebnis einen Korrelationskoeffizienten zwischen 0 und 1. Eins bedeutet, daß die Merkmale statistisch voneinander abhängig sind, während beim Nullwert die Merkmale statistisch nicht voneinander abhängig sind. Zur Berechnung der Korrelationskoeffizienten wurden die drei mal zehn Daten pro Merkmal aus den Reproduzierbarkeitsmessungen herangezogen.

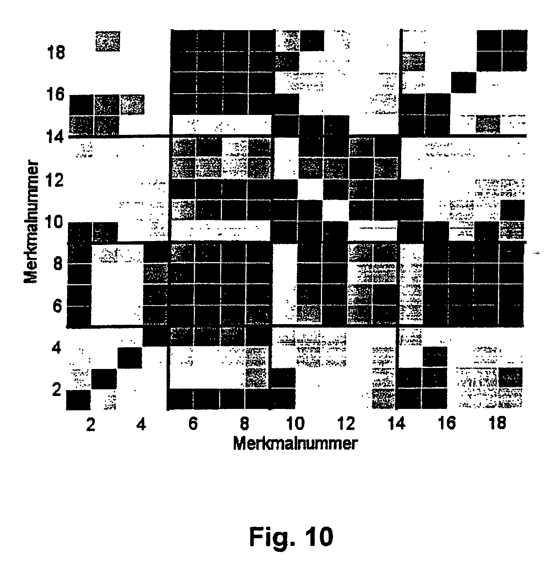

Fig. 10 zeigt die berechnete Korrelationsmatrix der 18 Merkmale (Farbverlauf von blau(0) nach rot/braun(1)). Die Merkmale sind in die vier Aufnahmekanäle unterteilt (Geh.rad.1-4; Geh.tan.5-8; Lager A 9-13; Lager B 14-18). Auffällig ist, daß die Merkmale fünf bis acht untereinander stark korrelieren (rot-brauner Farbton), wohingegen sie mit den anderen Merkmalen kaum Ähnlichkeiten aufweisen. Dies ist nicht verwunderlich, da es sich um "tangentiale" Merkmale handelt, bei den restlichen Merkmalen wurden Radialschwingungen herangezogen. Man sieht auch, daß Merkmale, denen gleiche technologische Zusammenhänge zugrunde liegen (Merkmal 9/14 f₀ und Merkmal 1/15 2f_{L}), ein gleichartiges Verhalten besitzen. Genauso ähneln sich die Merkmale 12/13 und 17/18, die den oberen Frequenzbereich der Lagerschwingungen auswerten. Diese Methode bietet in Kombination mit der Güte der Merkmale eine gute Möglichkeit, redundante Merkmale ausfindig zu machen. So ist das Verfahren auch dazu zu nutzen, um die Anzahl der Sensoren zu minimieren. Dies ist möglich, wenn die relevanten Merkmale eines Kanals sich in Merkmalen anderer Kanäle widerspiegeln.

Zusammenfassend betrifft die Erfindung ein akustisches Diagnosesystem D zur insbesondere automatischen Qualitätskontrolle von Prüfobjekten 1, insbesondere von Motoren, von Keramiken etc., mit einer Sensorik 2, insbesondere Schallsensoren, zur Wandlung von mechanischen Schwingungen in elektrische Signale E, mit einer Signalkonditionierung 3a, 3b zur Verstärkung und Tiefpaßfilterung der elektrischen Signale E, mit einem Analog/Digital-Wandler 3c zur Umwandlung der verstärkten und tiepaßgefilterten Signale in diskrete digitale Werte und mit einer Signalverarbeitungseinheit 4 zur Signalanalyse, Merkmalsextraktion und Klassifikation der einem jeweiligen Prüfobjekt 1 zuzuordnenden Fehler und/oder Güteklasse, wobei das System Mittel zur automatischen Archivierung über das Auftreten und die Häufigkeit von Güte- und/oder Fehlerklassen aufweist. Das Diagnosesystem kann Steuerungsmittel umfassen, die zur Steuerung eines Produktionsablaufs zur Herstellung des Prüfobjekts 1 vorgesehen sind.

## Patentansprüche

1. Akustisches Diagnosesystem (D) zur insbesondere automatischen Qualitätskontrolle von Prüfobjekten (1), insbesondere von Motoren, von Keramiken etc., mit einer Sensorik (2), insbesondere Schallsensoren, zur Wandlung von mechanischen Schwingungen in elektrische Signale (E), mit einer Signalkonditionierung (3a, 3b) zur Verstärkung und Tiefpassfilterung der elektrischen Signale (E), mit einem Analog/Digital-Wandler (3c) zur Umwandlung der verstärkten und tiefpassgefilterten Signale in diskrete digitale Werte und mit einer Signalverarbeitungseinheit (4) zur Signalanalyse, zur Extraktion von Merkmalen und zur Klassifikation der einem jeweiligen Prüfobjekt (1) zuzuordnenden Fehler und/oder Güteklasse, wobei das System Mittel zur automatischen Archivierung über das Auftreten und die Häufigkeit von Güte- und/oder Fehlerklassen aufweist und wobei das System Mittel zur Ermittlung von redundanten Merkmalen durch eine Korrelation von vorhandenen Merkmalen umfasst.

2. Diagnosesystem nach Anspruch 1, wobei
das Diagnosesystem (D) Steuerungsmittel aufweist oder mit Steuerungsmitteln gekoppelt ist, die zur Steuerung eines Produktionsablaufs zur Herstellung des Prüfobjekts (1) vorgesehen sind.

3. Diagnosesystem nach einem der Ansprüche 1 oder 2, wobei
das Diagnosesystem (D) Mittel umfasst, die anhand eines Eingangssignals (E) eines Prüfobjekts (1) mehrere Klassifizierungen ermitteln.

4. Diagnosesystem nach Anspruch 3, wobei
das Diagnosesystem Mittel umfasst, die anhand eines einem Prüfobjekt zugeordneten Eingangssignals (E) mehrere Merkmale zur Klassifizierung des Prüfobjekts (E) ermitteln, wobei die den jeweiligen Merkmalen zugehörigen Merhmalswerte jeweils farblich codiert werden.

5. Diagnosesystem nach einem der Ansprüche 1 bis 4, wobei
das Diagnosesystem (D) Mittel (4, 5) zur Erzeugung einer Korrelationsmatrix zur Visualisierung der redundanten Merkmale aufweist.

6. Diagnosesystem nach einem der Ansprüche 1 bis 5, wobei
das Diagnosesystem (D) zur Qualitätskontrolle von selbst erregten Prüfobjekten (1), insbesondere Motoren und/oder von fremd erregten Prüfobjekten (1), insbesondere von Glas oder Keramik vorgesehen ist.

7. Verfahren zur insbesondere automatischen Qualitätskontrolle von Prüfobjekten (1), insbesondere von Motoren, von Keramiken etc., bei dem mit einer Sensorik (2), insbesondere Schallsensoren, mechanische Schwingungen in elektrische Signale (E) umgewandelt werden, bei dem mit einer Signalkonditionierung (3a, 3b) die elektrischen Signale (E), verstärkt und tiefpassgefiltert werden, bei dem mit einem Analog/Digital-Wandler (3c) die verstärkten und tiefpassgefilterten Signale in diskrete digitale Werte umgewandelt werden und bei dem in einer Signalverarbeitungseinheit (4) eine Signalanalyse, eine Extraktion von Merkmalen und eine Klassifikation der einem jeweiligen Prüfobjekt (1) zuzuordnenden Fehler und/oder Güteklasse erfolgt, wobei das Auftreten und die Häufigkeit von Güte- und/oder Fehlerklassen automatisch archiviert werden und wobei redundante Merkmale durch eine Korrelation von vorhandenen Merkmalen ermittelt werden.

8. Verfahren nach Anspruch 7, wobei
dass durch das Diagnoseverfahren ein Produktionsablaufs zur Herstellung des Prüfobjekts (1) gesteuert wird.

9. Verfahren nach einem der Ansprüche 7 oder 8, wobei
anhand eines Eingangssignals (E) eines Prüfobjekts (1) mehrere Klassifizierungen ermittelt werden.

10. Verfahren nach Anspruch 9, wobei
anhand eines einem Prüfobjekt zugeordneten Eingangssignals (E) mehrere Merkmale zur Klassifizierung des Prüfobjekts (E) ermittelt werden, wobei die den jeweiligen Merkmalen zugehörigen Merkmalswerte jeweils farblich codiert werden.

11. Verfahren nach einem der Ansprüche 7 bis 10, wobei
die redundanten Merkmale durch Erzeugung einer Korrelationsmatrix visualisiert werden.

12. Verfahren nach einem der Ansprüche 7 bis 11, wobei
das Diagnoseverfahren zur Qualitätskontrolle von selbst erregten Prüfobjekten (1), insbesondere Motoren und/oder von fremd erregten Prüfobjekten (1), insbesondere von Glas oder Keramik angewendet wird.

## Claims

1. Acoustic diagnostic system (D), in particular for automatic quality control of test objects (1), in particular motors, ceramics, etc., with a sensor mechanism (2), in particular sound sensors, to convert mechanical vibrations into electrical signals (E), with a signal conditioning unit (3a, 3b) to amplify and low-pass filter the electrical signals (E), with an analogue/digital converter (3c) to convert the amplified and low-pass filtered signals into discrete digital values, and with a signal processing unit (4) to perform signal analysis, characteristics extraction and classification of the error class and/or quality class associated with a respective test object (1), the system having a component for automatic archiving of the occurrence and frequency of quality classes and/or error classes, and the system including a component for determining redundant characteristics by correlating existing characteristics.

2. Diagnostic system according to Claim 1, the diagnostic system (D) having a controller or being connected to a controller, which is provided for controlling a production process to manufacture the test object (1).

3. Diagnostic system according to one of Claims 1 or 2, the diagnostic system (D) having a component which, based on an input signal (E) of a test object (1), determines a plurality of classifications.

4. Diagnostic system according to Claim 3, the diagnostic system having a component which, based on an input signal (E) assigned to a test object, determines a plurality of characteristics to classify the test object (E), the characteristic values associated with the respective characteristics being colour-coded in each case.

5. Diagnostic system according to one of Claims 1 to 4, the diagnostic system (D) having a component (4, 5) to generate a correlation matrix in order to visualise the redundant characteristics.

6. Diagnostic system according to one of Claims 1 to 5, the diagnostic system (D) being provided for quality control of self-energised test objects (1), in particularly motors and/or of separately energised test objects (1), in particular of glass or ceramics.

7. Method, in particular for automatic quality control of test objects (1), in particular motors, ceramics, etc., in which a sensor mechanism (2), in particular sound sensors, is used to convert mechanical vibrations into electrical signals (E), in which a signal conditioning unit (3a, 3b) is used to amplify and low-pass filter the electrical signals (E), in which an analogue/digital converter (3c) is used to convert the amplified and low-pass filtered signals into discrete digital values, and in which a signal processing unit (4) is used to perform signal analysis, characteristics extraction and classification of the error class and/or quality class associated with a respective test object (1), the occurrence and frequency of quality classes and/or error classes being automatically archived, and redundant characteristics being determined by correlating existing characteristics.

8. Method according to Claim 7, the diagnostic method controlling a production process to manufacture the test object (1).

9. Method according to one of Claims 7 or 8, a plurality of classifications being determined based on an input signal (E) of a test object (1).

10. Method according to Claim 9, a plurality of characteristics to classify the test object (E) being determined based on an input signal (E) assigned to a test object, the characteristic values associated with the respective characteristics being colour-coded in each case.

11. Method according to one of Claims 7 to 10, the redundant characteristics being visualised by generating a correlation matrix.

12. Method according to one of Claims 7 to 11, the diagnostic method being used for quality control of self-energised test objects (1), in particular motors and/or of separately energised test objects (1), in particular of glass and ceramics.

## Revendications

1. Système de diagnostic acoustique (D) pour le contrôle de qualité notamment automatique d'objets d'essai (1), notamment de moteurs, de céramiques, etc., comprenant une unité sensorielle (2), notamment des capteurs acoustiques, pour la transformation d'oscillations mécaniques en signaux électriques (E), un conditionnement de signal (3a, 3b) pour l'amplification et le filtrage passe-bas des signaux électriques (E), un convertisseur analogique-numérique (3c) pour la conversion des signaux amplifiés et filtrés passe-bas en valeurs numériques discrètes et avec une unité de traitement de signal (4) pour l'analyse de signal, pour l'extraction de caractéristiques et pour la classification d'une classe de défaut et/ou de qualité à associer à un objet à contrôler (1) respectif, le système comportant des moyens pour l'archivage automatique de l'occurrence et de la fréquence de classes de qualité et/ou de défaut et le système comprenant des moyens pour la détermination de caractéristiques redondantes par une corrélation de caractéristiques existantes.

2. Système de diagnostic selon la revendication 1, dans lequel le système de diagnostic (D) comporte des moyens de commande ou est couplé à des moyens de commande qui sont prévus pour la commande d'un processus de production en vue de la fabrication de l'objet à contrôler (1).

3. Système de diagnostic selon l'une des revendications 1 ou 2, dans lequel le système de diagnostic (D) comprend des moyens qui déterminent plusieurs classifications à l'aide d'un signal d'entrée (E) d'un objet à contrôler (1).

4. Système de diagnostic selon la revendication 3, dans lequel le système de diagnostic comprend des moyens qui déterminent à l'aide d'un signal d'entrée (E) associé à un objet à contrôler plusieurs caractéristiques pour la classification de l'objet à contrôler (E), les valeurs de caractéristiques associées aux caractéristiques respectives étant codées à chaque fois par des couleurs.

5. Système de diagnostic selon l'une des revendications 1 à 4, dans lequel le système de diagnostic (D) comporte des moyens (4, 5) pour la production d'une matrice de corrélation afin de visualiser les caractéristiques redondantes.

6. Système de diagnostic selon l'une des revendications 1 à 5, dans lequel le système de diagnostic (D) est prévu pour le contrôle de qualité d'objets d'essai (1) auto-excités, notamment de moteurs, et/ou d'objets d'essai (1) excités de l'extérieur, notamment de verre ou de céramique.

7. Procédé pour le contrôle de qualité notamment automatique d'objets d'essai (1), notamment de moteurs, de céramiques, etc., dans lequel des oscillations mécaniques sont transformées en signaux électriques (E) avec une unité sensorielle (2), notamment avec des capteurs acoustiques, dans lequel les signaux électriques (E) sont amplifiés et filtrés passe-bas avec un conditionnement de signal (3a, 3b), dans lequel les signaux amplifiés et filtrés passe-bas sont convertis en valeurs numériques discrètes avec un convertisseur analogique-numérique (3c) et dans lequel on effectue dans une unité de traitement de signal (4) une analyse de signal, une extraction de caractéristiques et une classification de la classe de défaut et/ou de qualité à associer à un objet à contrôler (1) respectif, l'occurrence et la fréquence de classes de qualité et/ou de défaut étant archivées automatiquement et des caractéristiques redondantes étant déterminées par une corrélation de caractéristiques existantes.

8. Procédé selon la revendication 7, dans lequel on commande via le procédé de diagnostic un processus de production pour la fabrication de l'objet à contrôler (1).

9. Procédé selon l'une des revendications 7 ou 8, dans lequel on détermine plusieurs classifications à l'aide d'un signal d'entrée (E) d'un objet à contrôler (1).

10. Procédé selon la revendication 9, dans lequel on détermine à l'aide d'un signal d'entrée (E) associé à un objet à contrôler plusieurs caractéristiques pour la classification de l'objet à contrôler (1), les valeurs de caractéristiques associées aux caractéristiques respectives étant codées à chaque fois par des couleurs.

11. Procédé selon l'une des revendications 7 à 10, dans lequel on visualise les caractéristiques redondantes en produisant une matrice de corrélation.

12. Procédé selon l'une des revendications 7 à 11, dans lequel on utilisa le procédé de diagnostic pour le contrôle de qualité d'objets d'essai (1) auto-excités, notamment de moteurs, et/ou d'objets d'essai (1) excités de l'extérieur, notamment de verre ou de céramique.
